# EUROPÄISCHE PATENTANMELDUNG

(11) **EP 2 394 855 A1**
(43) Veröffentlichungstag der Anmeldung: **14.12.2011**
(21) Anmeldenummer: 11004751.1
(22) Anmeldetag: 10.06.2011
(51) Int. Cl.: B60R 1/00

(54) **Rücksehhilfe für ein Fahrzeuggespann**

(30) Priorität: 12.06.2010 DE 202010007914 U
(71) Anmelder: ConWys AG, 6023 Rothenburg (CH)
(72) Erfinder: Wyston, Alexander, 6003 Luzern (CH)
(74) Vertreter: Stenger, Watzke & Ring

(57) **Zusammenfassung**

Die Erfindung betrifft eine Rücksehhilfe für ein Fahrzeuggespann (5) aus einem Pkw (1) und einem von dem Pkw (1) gezogenen Anhänger, insbesondere Wohnanhänger (4), mit einer den rückwärtigen Umgebungsbereich (6) des Fahrzeuggespanns (5) zumindest teilweise erfassten Kamera (4) sowie eine Anzeigeeinrichtung (7) für die von der Kamera (4) gelieferten Bildinformationen (14). Um eine Rücksehhilfe für ein Fahrzeuggespann (5) bereitzustellen, die auch unter sicherheitsrelevanten Aspekten eine vereinfachte Handhabung ermöglicht, wird mit der Erfindung vorgeschlagen, dass die Anzeigeeinrichtung (7) eine Anzeigeoberfläche (8) aufweist, die als Ersatz für einen im Innenraum des Pkws (1) angeordneten Rückspiegel (2) dient.

## Beschreibung

Die Erfindung betrifft eine Rücksehhilfe für ein Fahrzeuggespann aus einem Pkw und einem von dem Pkw gezogenen Anhänger, insbesondere Wohnanhänger.

Aus dem Stand der Technik bekannte Personenkraftwagen, kurz Pkws, verfügen über einen im Innenraum angeordneten Rückspiegel, auch Innenspiegel genannt. Einem Fahrer dient dieser Spiegel als Rücksehhilfe. Aus dem Stand der Technik bekannte Pkws verfügen darüber hinaus über in der Regel zwei Außenspiegel, wobei ein erster Außenspiegel fahrerseitig und ein zweiter Außenspiegel beifahrerseitig vorgesehen ist. Auch die Außenspiegel dienen einem Fahrer als Rücksehhilfe.

Pkws können bei entsprechender Ausrüstung als Zugfahrzeug für einen Anhänger, insbesondere einen Wohnanhänger dienen. Im verkoppelten Zustand bilden ein Pkw und ein daran angekoppelter Anhänger ein Fahrzeuggespann aus.

Je nach Aufbauhöhe des Anhängers kann die freie Sicht aus dem den Anhänger ziehenden Pkw nach hinten behindert oder sogar vollständig versperrt sein, wie beispielsweise bei einem als Wohnanhänger ausgebildeten Anhängers der Fall ist. Es ist insbesondere auch der Blick nach hinten mittels des Innenrückspiegels versperrt, so dass einem Fahrer als Rücksehhilfen nur noch die Außenspiegel des Pkws zur Verfügung stehen. Die Verwendung ausschließlich der Außenspiegel als Rücksehhilfe ist in der Regel für die meisten Fahrer ungewohnt, da beim Fahren ohne Anhänger der Innenrückspiegel für die Sicht nach hinten Verwendung findet. Bei angehängtem Anhänger, insbesondere Wohnanhänger ist diese Sicht nach hinten durch den Anhänger, insbesondere Wohnanhänger allerdings versperrt.

Obgleich im Falle eines Fahrzeuggespanns die ausschließliche Verwendung der Außenspiegel des Pkws als Sehhilfe hinreichend ist, besteht Verbesserungsbedarf, auch unter sicherheitsrelevanten Aspekten.

Aus dem Stand der Technik sind auch kameragestützte Systeme bekannt geworden, die es einem Fahrer eines Fahrzeuggespanns erleichtern sollen, das Fahrzeuggespann zu rangieren, insbesondere mit Blick auf eine Rückwärtsfahrt bzw. zur visuellen Einsichtnahme des in vorwärtsgerichteter Fahrtrichtung hinter dem Fahrzeuggespann liegenden Umgebungsbereichs. So offenbart beispielsweise die DE 199 10 153 AA ein Multisicherheitssystem für Pkws, Lkws, Karavans und Anhänger durch optische Erfassung des Nachfolge- und Überholverkehrs auf Innenbildschirme. Gemäß diesem Multisicherheitssystem kommt eine Vielzahl von Kameras zum Einsatz, die am Fahrzeug, im Falle eines Fahrzeuggespanns am Zugfahrzeug angeordnet sind. Mittels dieser Kameras kann der Umgebungsbereich des Fahrzeuges erfasst werden, und das von diesen Kameras gelieferte Bild wird auf einen im Fahrzeug vorhandenen Bildschirm übertragen. Dabei kann der Bildschirm stationär oder beweglich ausgebildet sein. Der Innenrückspiegel wird bei einem in solcher Weise ausgebildeten System in seiner Funktion nicht weiter benötigt, da der Umgebungsbereich des Fahrzeuges durch die Kameras vollständig erfasst und dem Fahrzeuglenker über entsprechende Bildschirme im Fahrzeug angezeigt wird.

Aus dem Stand der Technik ist gemäß der DE 198 16 822 B4 ferner ein Kamerasystem zum Überwachen einer nicht unmittelbar einsehbaren Umgebung eines Anhängerfahrzeuges bekannt geworden. Gemäß diesem Kamerasystem kommen an dem gezogenen Fahrzeug eines Fahrzeuggespanns stationär angeordnete Kameras zum Einsatz. Diese erfassen den Umgebungsbereich insbesondere des Anhängers und liefern die Bilddaten zu einem separaten Bildschirm, der im Innenraum des Zugfahrzeuges angeordnet ist. Auf diese Weise wird es dem Lenker des Fahrzeuggespanns ermöglicht, sich die von den Kameras des Kamerasystems erfassten Bilder im Innenraum des Zugfahrzeuges direkt ansehen zu können, so dass es der Funktion nach eines Innenspiegels nicht mehr bedarf.

Obgleich sich auch diese aus dem Stand der Technik vorbekannten Kamerasysteme im alltäglichen Praxiseinsatz bewährt haben, besteht Verbesserungsbedarf, insbesondere mit Blick auf eine vereinfachte Handhabung, nicht zuletzt auch aus sicherheitsrelevanten Aspekten heraus, denn die gleichzeitige Überwachung und Kontrolle von unter Umständen mehreren im Zugfahrzeug innenraumseitig angeordneten Bildschirmen kann fahrerseitig gegebenenfalls zur Überforderung und damit zur Verwirrung führen. Es ist hier insofern Abhilfe gefragt.

Es ist deshalb die **Aufgabe** der Erfindung, eine Rücksehhilfe für ein Fahrzeuggespann bereitzustellen, die auch unter sicherheitsrelevanten Aspekten eine vereinfachte Handhabung ermöglicht.

Zur **Lösung** dieser Aufgabe wird mit der Erfindung vorgeschlagen eine Rücksehhilfe für ein Fahrzeuggespann aus einem Pkw und einem von dem Pkw gezogenen Anhänger, insbesondere Wohnanhänger, mit einer den rückwärtigen Umgebungsbereich des Fahrzeuggespanns zumindest teilweise erfassenden Kamera sowie einer Anzeigeeinrichtung für die von der Kamera gelieferten Bildinformationen, wobei die Anzeigeeinrichtung eine Anzeigeoberfläche aufweist, die als Ersatz für einen im Innenraum des Pkws angeordneten Rückspiegel dient.

Die erfindungsgemäße Rücksehhilfe verfügt über eine Kamera. Diese dient der Erfassung des rückwärtigen Umgebungsbereichs des Fahrzeuggespanns. Aus diesem Grund ist die Kamera bevorzugterweise rückwärtig am Anhänger, insbesondere Wohnanhänger angeordnet.

Die von der Kamera erfassten Bildinformationen werden dem Fahrer des Fahrzeuggespanns über die Anzeigeoberfläche einer Anzeigeeinrichtung wiedergegeben. Dabei dient die Anzeigeoberfläche als Ersatz für einen im Innenraum des Pkws angeordneten Rückspiegel. Die Anzeigeoberfläche dient also anstelle des Innenrückspiegels als Wiedergabemedium. Der gewohnte Blick in den Innenrückspiegel wird simuliert, indem das von der Kamera erfasste Bild über die als Ersatz für den Innenrückspiegel dienende Anzeigeoberfläche wiedergegeben wird. Es wird somit die Gewohnheit des Fahrers berücksichtigt, der den Innenspiegel bei nicht angehängtem Anhänger als Rücksehhilfe nach hinten verwendet.

Die Verwendung von Kameras im Automobilbereich ist aus dem Stand der Technik nicht unbekannt. Die Verwendung von Kameras findet allerdings insbesondere als Parkhilfe statt. Auch das Rückwärtsfahren kann mit vorbekannten Kamerasystemen vereinfacht werden. Die Neuerung nach der Erfindung besteht indes darin, dass die Rücksehhilfe über eine Kamera verfügt, die den rückwärtigen Umgebungsbereich eines Fahrzeuggespanns permanent überwacht, wobei das von der Kamera erfasste Bild mittels einer Anzeigeeinrichtung dem Fahrer des Fahrzeuggespanns zur Anzeige gebracht wird, wobei die Anzeigeeinrichtung den Pkw-Innenspiegel ersetzt, also anstelle des Spiegelbilds das Kamerabild zur Anzeige kommt. Obgleich also die Sicht aus dem Pkw nach hinten durch den an dem Pkw angehängten Anhänger versperrt ist, kann der Fahrer in gewohnter Weise in den Innenrückspiegel blicken, wobei das ihm angezeigte Bild von der rückwärtig am Anhänger angebrachten Kamera stammt. Eine insgesamt vereinfachte Handhabung wird so erreicht. Im Übrigen ist die erfindungsgemäße Ausgestaltung auch vor dem Hintergrund sicherheitsrelevanter Überlegungen von Vorteil, da der Fahrer nicht mehr nur auf die Pkw-Außenspiegel als Rücksehhilfen angewiesen ist. Die erfindungsgemäße Ausgestaltung erlaubt es vielmehr, einen umfassenden Blick nach hinten zu erhalten, und zwar auch hinsichtlich des Umgebungsbereichs, der von den Pkw-Außenspiegeln nicht erfasst werden kann.

Gegenüber den aus dem Stand der Technik vorbekannten Kamerasystemen zeichnet sich die erfindungsgemäße Ausgestaltung dadurch aus, dass die von den Kameras erfassten Bilder mittels einer Anzeigeoberfläche einer Anzeigeeinrichtung wiedergegeben werden, die als Ersatz für einen im Innenraum des Pkws angeordneten Rückspiegel dient. Dabei meint "Ersatz" im Sinne der Erfindung nicht nur einen funktionalen Ersatz. Die Anzeigeoberfläche ist erfindungsgemäß vielmehr anstelle des im Innenraum des Pkws angeordneten Rückspiegels zu verwenden, wobei sich die Anzeigeoberfläche an der für den Lenker des Zugfahrzeuges gewohnten Stelle für den Innenraumspiegel befindet. Im Unterschied zu den vorbeschriebenen Kamerasystemen nach dem Stand der Technik kommen also keine zusätzlichen Bildschirme oder Anzeigeeinrichtungen zum Einsatz, die in Ergänzung zum Innenraumspiegel, auch Rückspiegel genannt im Bereich beispielsweise des Armaturenbrettes angeordnet sind. Ein Verwender der erfindungsgemäßen Rücksehhilfe muss sich in seinen Fahrgewohnheiten also nicht umstellen. Es ist insbesondere nicht erforderlich, neben dem gewohnten Blick in den Innenraumspiegel weitere Kameras oder Anzeigeeinrichtungen im Blick zu halten. Insofern erweist sich die erfindungsgemäße Rücksehhilfe als sehr viel anwenderfreundlicher.

Aus dem Stand der Technik sind auch Systeme bekannt geworden, die über einen rückspiegelintegrierten Bildschirm verfügen. Diese Systeme ermöglichen über den Bildschirm eine Kamerabildanzeige, gestatten im Übrigen aber die herkömmliche Spiegelfunktion. Es wird insofern eine Aufteilung des Rückspiegels in Bereiche vorgeschlagen, wobei ein Bereich die Rückspiegelfunktion und ein Anderer die Kamerabildwiedergabefunktion erfüllt. Es kommt gemäß dieser Systeme also nicht zu einem Ersatz des Rückspiegels durch eine der Kamerabildwiedergabe dienenden Anzeigenoberfläche. Dementsprechend sind solche Systeme auch nicht für ein Fahrzeuggespann geeignet, da der die Spiegelfunktion übernehmende Bereich des Innenspiegels bei einem Fahrzeuggespann völlig ungenutzt bleibt. Dies deshalb, weil der rückwärtige Raum hinter dem Zugfahrzeug durch den Anhänger des Fahrzeuggespanns optisch verdeckt bleibt. Im Übrigen ist bei solchen Systemen die Kamera im rückwärtigen Bereich des angetriebenen Fahrzeuges montiert, da es systembedingt darum geht, beim Rückwärtsfahren denjenigen Umgebungsbereich kameratechnisch zu erfassen, der im toten Winkel des Rückspiegels liegt. Der Sinn und Zweck eines solchen Systems besteht also darin, die Rückspiegelfunktion nach wie vor im vollen Umfang nutzen zu können, der durch den Innenspiegel aber nicht einsehbare Bereich durch eine Kamera zu erfassen, wobei die Bildwiedergabe über ein Display erfolgt, das als Teil des Rückspiegels ausgebildet ist.

Die Erfindung geht hier einen anderen Weg. Es geht insbesondere darum, den rückwärtigen Umgebungsbereich eines Fahrzeuggespanns kameratechnisch zu erfassen, wobei das Kamerabild über eine Anzeigeoberfläche im Innenraum des Zugfahrzeuges wiedergegeben wird, wobei die Anzeigeoberfläche den Rückspiegel vollends ersetzt, der Fahrzeuglenker also anstelle eines herkömmlichen Spiegelbilds ein Kamerabild im Rückspiegel angezeigt bekommt.

Ein Weiteres kommt insbesondere aus sicherheitsrelevanten Aspekten hinzu. Der Lenker eines Fahrzeuggespanns ist es gewohnt, in den Innenraumspiegel zu sehen, um den Umgebungsbereich hinter dem Zugfahrzeug visuell zu erfassen. Im Falle eines Fahrzeuggespanns, wenn also das Zugfahrzeug einen Anhänger zieht, ist dieser Blick in den Innenraumspiegel vergebens, da der Umgebungsbereich durch den gezogenen Anhänger verdeckt ist. Der Umgebungsbereich hinter dem gezogenen Anhänger ist durch den Innenraumspiegel auch nicht einsehbar. Gleichwohl schaut der Fahrzeuglenker in den Innenspiegel, ganz einfach deshalb, weil er dies so gewohnt ist. Bei aus dem Stand der Technik bekannten Kamerasystemen kann der Fahrzeuglenker über separate Bildschirme zwar den Umgebungsbereich hinter dem Fahrzeuggespann einsehen, doch wird er in gewohnter Weise erst in den Innenspiegel blicken, um dabei festzustellen, dass die Sicht nach hinten durch den Anhänger versperrt ist. Erst dann erfolgt eine Betrachtung der im Fahrzeuginnenraum vorgesehenen Kamerabildschirme. Bis der Fahrzeuglenker also realisiert, an einer für ihn ungewohnten Stelle im Zugfahrzeug das über die Kameras erfasste rückwärtige Bild des Fahrzeuggespanns in Augenschein zu nehmen, können wertvolle Sekunden verstrichen sein, was im Straßenverkehr, insbesondere bei zügigen Autobahnfahrten von erheblichem Nachteil sein kann, insbesondere in kritischen Fahrsituationen. Das erfindungsgemäße System schafft hier Abhilfe, da das von den Kameras erfasste Bild über eine Anzeigenoberfläche zur Anzeige gebracht wird, die sich an der für den Innenraumspiegel fahrerseitig gewohnten Stelle befindet. Insbesondere bei kritischen Fahrsituationen, wenn der Fahrzeuglenker also ganz instinktiv seiner Gewohnheit folgend in Richtung des Innenrückspiegels blickt, wird er gemäß der erfindungsgemäßen Rücksehhilfe genau dort das von den Kameras erfasste Bild des rückwärtigen Umgebungsbereiches des Fahrzeuggespanns sehen, das heißt in Augenschein nehmen können. Es macht für den Fahrzeuglenker insofern keinen Unterschied mehr, ob er über den Innenraumspiegel ein Spiegelbild oder ein von einer Kamera erfasstes Bild wahrnimmt. In jedem Fall erhält er an der für ihn gewohnten Stelle im Fahrzeug, nämlich der Positionsstelle für den Innenraumspiegel, ein Bild vom rückwärtigen Umgebungsbereich des Fahrzeuggespanns, was in Entsprechung der erfindungsgemäßen Rücksehhilfe durch eine oder gegebenenfalls auch mehrere Kameras erfasst ist. Die erfindungsgemäße Rücksehhilfe erbringt insofern den Vorteil, dass das von der Kamera erfasste Bild an der im Innenraum des Pkws für den Rückspiegel vorgesehenen Stelle angezeigt wird.

Das von der Kamera erfasste Bild kann zwecks optimierter Anzeige aufbereitet sein. So kann zum Beispiel eine Bild- oder Ausschnittsvergrößerung vorgesehen sein. Ferner lassen sich Helligkeitsanpassungen vornehmen. So kann zum Beispiel bei Dämmerungs- und/oder Nachtfahrten eine automatisierte Bildaufhellung vorgesehen sein. Das von der Kamera erfasste Bild kann insofern gegenüber dem 1:1 Spiegelbild des Rückspiegels für die menschliche Wahrnehmung aufgebessert sein, und zwar hinsichtlich der Größendarstellung, des Kontrastes, der Helligkeit und/oder dergleichen.

Mit der Kamera lassen sich gegebenenfalls auch solche Umgebungsbereiche des Fahrzeuggespanns erfassen, die bei standardmäßig eingestellten Spiegeln nicht eingesehen werden können. Dies betrifft insbesondere den sogenannten "toten Winkel". Mit der erfindungsgemäßen Rücksehhilfe kann dieser erfasst und für den Fahrer einsehbar angezeigt werden. Insbesondere bei Richtungswechseln und/oder Überholmanövern durch Dritte ist eine solche Bildwiedergabe von Vorteil.

Die Anzeigeoberfläche der Anzeigeeinrichtung ist gemäß einem weiteren Merkmal der Erfindung als Display ausgebildet. Bei einem solchen Display kann es sich beispielsweise um ein LCD-Display handeln. Dieses ist im bestimmungsgemäßen Verwendungsfall innenseitig des Pkws angeordnet. Eine Anordnung direkt am Innenrückspiegel ist bevorzugt.

Das Display kann gemäß einem weiteren Merkmal der Erfindung verschwenkbar im Innenraum des Pkws angeordnet sein, und zwar derart, dass es im Verwendungsfall den Innenrückspiegel zumindest teilweise abdeckt. Es ist insbesondere eine klappbare Anordnung bevorzugt. Diese kann beispielsweise dadurch realisiert sein, dass das Display gelenkig an einem Halter befestigt ist. Der Halter ist wiederum am Innenspiegel angeordnet, womit insgesamt eine Befestigung des Displays am Innenspiegel erfolgt. Da das Display verschwenkbar am Halter angeordnet ist, kann das Display relativ zum Halter und im Verwendungsfall somit auch relativ zum Rückspiegel verschwenkt werden. In der Verwendungsstellung ist das Display derart verschwenkt, dass es den Rückspiegel zumindest teilweise abdeckt und somit ersetzt. In Nicht-Gebrauchsstellung ist das Display beiseite geschwenkt, beispielsweise nach oben, womit der Blick auf den Rückspiegel in gewohnter Weise freigegeben ist. Das Display ist in dieser Stellung ausgeschaltet und es werden über die Anzeigeoberflächen keine Kamerabilder wiedergegeben. Gemäß einer bevorzugten Ausführungsform der Erfindung ist in diesem Zusammenhang vorgesehen, dass eine Verstellung des Displays elektromotorisch erfolgt. Eine solche Verstellung kann beispielsweise auf "Knopfdruck" erfolgen. Denkbar ist auch eine vollautomatische Verschwenkung, die durchgeführt wird, wenn dem System verwenderseitig über entsprechende Bedienelemente mitgeteilt wird, dass nunmehr die erfindungsgemäße Rücksehhilfe aktiviert ist. Bei nicht aktivierter Rücksehhilfe bzw. bei Deaktivierung erfolgt sodann eine automatische Verschwenkung des Displays in die Nicht-Gebrauchsstellung.

Es kann gemäß einem weiteren Merkmal der Erfindung auch vorgesehen sein, dass das Zugfahrzeug über eine allgemein als Rücksehhilfe zu bezeichnende Einrichtung verfügt. Diese Rücksehhilfe stellt nach Wahl des Fahrzeuglenkers entweder einen als Rückspiegel dienenden Innenspiegel oder eine Anzeigeoberfläche zur Wiedergabe von Bilddaten einer Kamera zur Verfügung. Dabei kann verwenderseitig wahlweise zwischen dem einen Anzeigenmodus und dem anderen Anzeigenmodus hin- und hergewechselt werden.

Gemäß einer alternativen Ausgestaltung der Erfindung kann die Anzeigeoberfläche als integraler Bestandteil des Rückspiegels ausgebildet sein. Dabei ist unter "integraler Bestandteil" im Sinne der Erfindung zu verstehen, dass die Anzeigeoberfläche vom Rückspiegel bereitgestellt ist, die Anzeigeoberfläche also Teil des Rückspiegels ist. Im Unterschied zur vorerläuterten Ausgestaltung kommt zur Bildanzeige also kein separat ausgebildetes Display zum Einsatz.

Gemäß einem weiteren Merkmal der Erfindung ist vorgesehen, das von der Kamera erfasste und bevorzugter Weise über ein Display wiedergegebene Bild in seiner Darstellung individuell zu manipulieren. So kann beispielsweise vorgesehen sein, dass Zoom-Funktionen vorhanden sind, die es dem Verwender gestatten, von einer Normalansicht auf eine Weitwinkel- oder Telesicht zu wechseln. Dabei kann vorgesehen sein, dass diese Zoom-Funktion als reine Softwarelösung zur Verfügung gestellt wird. Alternativ können natürlich auch entsprechende Kameraobjektive zum Einsatz kommen, die solche Zoom-Funktionen kameraseitig bereits ermöglichen. Es ist in jedem Fall bevorzugt, eine Bedienung vom Innenraum des Fahrzeuges vornehmen zu können, vorzugsweise mittels für den Verwender leicht erreichbarer Knöpfe, Schalter und/oder dergleichen. Dabei kann gemäß einem weiteren Merkmal der Erfindung vorgesehen sein, dass derartige Bedienelemente im Display integriert ausgebildet sind, beispielsweise in Ausgestaltung eines Touchscreens.

Gemäß einem weiteren Merkmal der Erfindung ist eine Mehrzahl von Kameras vorgesehen. So können beispielsweise drei Kameras vorgesehen sein, vorzugsweise eine erste Kamera für den in Verlängerung des Fahrzeuggespanns rückwärtigen Umgebungsbereich, eine zweite Kamera für den rückwärtig linken Umgebungsbereich und eine dritte Kamera für den rückwärtig rechten Umgebungsbereich. Gemäß dieser Ausgestaltung sind sämtliche "toten Winkel" abgedeckt. Dabei ist zumindest eine Kamera am gezogenen Anhänger eines Fahrzeugespanns angeordnet, bevorzugter Weise zumindest die Kamera, die der Erfassung des rückwärtigen Umgebungsbereichs des Fahrzeuggespanns dient. Aber auch die weiteren Kameras können am Anhänger angeordnet sein.

Gemäß einem weiteren Merkmal der Erfindung ist vorgesehen, dass die Anzeigeoberfläche eine der Anzahl der Kameras entsprechende Anzahl von Teilanzeigeoberflächen bereitstellt. Die Anzeigeoberfläche ist demnach in Teilanzeigeoberflächen unterteilt, wobei jede Teilanzeigeoberfläche der Darstellung eines Kamerabildes dient. Der Verwender hat somit auch bei mehreren installierten Kameras sämtliche Kamerabilder gleichermaßen im Blick. Anstelle der Ausgestaltung von Teilanzeigeoberflächen kann auch vorgesehen sein, zwischen mehreren installierten Kameras auswählen zu können, wobei nur das von der ausgewählten Kamera erfasste Bild von der Anzeigenoberfläche wiedergegeben wird.

Die Rücksehhilfe ist gemäß einem weiteren Merkmal der Erfindung durch eine Verarbeitungseinrichtung zur Verarbeitung der von der Kamera gelieferten Bildinformationen gekennzeichnet. Diese Verarbeitungseinrichtung sorgt zum einen für die Aufbereitung der von der Kamera gelieferten Daten in einer solchen Weise, dass eine Darstellung des Kamerabildes auf der Anzeigeoberfläche in bestimmungsgemäßer Weise stattfinden kann. Darüber hinaus können aber auch weitere Verarbeitungen mittels der Verarbeitungseinrichtung vorgenommen werden. Insbesondere können bildbearbeitende Maßnahmen mittels der Verarbeitungseinrichtung durchgeführt werden, beispielsweise zum Zwecke der Vergrößerung, der Helligkeits- und/oder -Kontrastaufwertung.

Gemäß einem weiteren Merkmal der Erfindung kann eine Fernbedienung vorgesehen sein, über die sämtliche Funktionen der erfindungsgemäßen Rücksehhilfe verwenderseitig gesteuert werden können. Die Möglichkeit der Fernbedienung kann dabei sowohl die Darstellung auf der Anzeigeoberfläche betreffen, ebenso wie die Bereitstellung der Anzeigeoberfläche, beispielsweise durch vorheriges Verschwenken und/oder Einschwenken eines Displays oder dergleichen.

Ein weiteres Merkmal kann eine Bedienung über eine Sprachsteuerung sein, über die sämtliche Funktionen der erfindungsgemäßen Rücksehhilfe verwenderseitig gesteuert werden können. Diese Sprachsteuerung kann dabei alle Funktionen der Fernbedienung umfassen.

Gemäß einem weiteren Merkmal der Erfindung ist ein Datenspeicher vorgesehen. Dieser Datenspeicher dient der Speicherung der von der Kamera erfassten Daten. Dabei kann vorgesehen sein, dass der Datenspeicher zur Einsparung von Speicherkapazität ständig derart überschrieben wird, dass nur ein in die Vergangenheit zurückreichender Zeitabschnitt vorgebbarer Länge von zum Beispiel 15 Minuten abrufbar ist. Die Speicherung der Bilddaten kann insbesondere im Falle eines Unfalls von Interesse sein, weil sich anhand der Bilddaten gegebenenfalls eine Unfallrekonstruktion erstellen lässt. Es kann in diesem Zusammenhang auch vorgesehen sein, dass eine dauerhafte Speicherung der Bilddaten durchgeführt wird, das heißt eine Überschreibung bereits gespeicherter Bilddaten nicht erfolgt. In diesem Zusammenhang kann ferner vorgesehen sein, dass die Bilddaten per Funk an eine zentrale Stelle zum Zwecke der Speicherung übermittelt werden. Die Speicherung der Bilddaten an zentraler Stelle hat im Übrigen den Vorteil, dass die Daten auch insofern gesichert sind, als dass sie vom Fahrzeug getrennt aufbewahrt werden, so dass beispielsweise auch im Falle eines Unfalls die Gefahr nicht besteht, dass es zur Datenvernichtung infolge eines unfallbedingten Defekts an dem Speichermedium kommt. Die an die zentrale Stelle übersandten Bilddaten können im Übrigen dazu beitragen, das Fahrzeug im Falle eines Diebstahls leichter ausfindig machen zu können. So können die vom Fahrzeug gelieferten und zentral verwalteten Bilddaten dazu genutzt werden, die Umgebung des Fahrzeuges und damit dessen Standort besser ausfindig machen zu können.

Gemäß einem weiteren Merkmal der Erfindung ist eine Funkverbindung vorgesehen. Diese dient der Übermittlung der von der Kamera erfassten Bilder zur Anzeigeeinrichtung. Es kann insbesondere eine Nahfunkverbindung, wie zum Beispiel Bluetooth zum Einsatz kommen. Anstelle einer Funkverbindung kann auch eine kabelgestützte Verbindung vorgesehen sein. Die Ausgestaltung einer Funkverbindung erweist sich gegenüber einer kabelgestützten Verbindung insbesondere aus Gründen der vereinfachten Nachrüstung als vorteilhaft. Bevorzugterweise bilden die Anzeigeeinrichtung, eine Empfangsstelle sowie eine Empfangsantenne eine kompakte und gemeinsame Baueinheit aus. Auch die Kamera kann in Kombination mit einer Sendestelle und einer Sendeantenne als Baueinheit ausgebildet sein. Für eine verwendungsfertige Installation bedarf es dann nur der Installation der Kamera-Baukomponente am Anhänger und der Anzeigeeinrichtung-Komponente im Innenraum des Pkws. Nach einer Installation findet eine Selbsterkennung statt und die erfindungsgemäße Rücksehhilfe ist einsatzbereit.

Die erfindungsgemäße Rücksehhilfe kann gemäß einer ergänzenden Ausführungsform auch über eine akustische Aufnahme-, Aufbereitungs- und/oder Wiedergabeeinrichtung verfügen. Zu diesem Zweck können außenseitig des Fahrzeuggespanns, sei es am Zugfahrzeug oder am gezogenen Fahrzeug Mikrofone, beispielsweise auch in der Ausgestaltung als Richtmikrofone vorgesehen sein. Im Innenraum des Zugfahrzeuges befinden sich entsprechende akustische Ausgabeeinrichtungen, beispielsweise in Form von Lautsprechern. Dabei können die im Fahrzeug ohnehin vorhandenen Lautsprecher genutzt werden. Über die Außenmikrofone aufgenommene akustische Signale können so im Fahrzeuginnenraum zur Ausgabe gebracht werden.

Es kann dabei vorgesehen sein, dass bestimmte Frequenzbereiche hinsichtlich des Aufnahmesignals für eine Wiedergabe gesperrt sind. Dies deshalb, um den Fahrzeuglenker nicht mit akustischen Signalen zu überfluten. Es kann beispielsweise vorgesehen sein, die akustische Anlage insbesondere auf den Frequenzbereich von Martinshörnern auszurichten. Auf diese Weise wird sichergestellt, dass von den Mikrofonen aufgenommene akustische Signale, die einem Martinshorn entstammen, an den Fahrer weitergeleitet bzw. im Innenraum des Fahrzeugs über die dort befindlichen Lautsprecher zur Ausgabe gebracht werden. Eine solche Ausgestaltung ist insbesondere dann sinnvoll, wenn es der Fahrzeuglenker gewohnt ist, während der Autofahrt laut Musik oder Radio zu hören. Einem unabsichtlichen Überhören des Martinshorn kann so entgegengewirkt werden.

Die akustische Ausgestaltung der erfindungsgemäßen Rücksehhilfe kann auch ohne den Einsatz von Außenmikrofonen auskommen. Gemäß dieser Ausgestaltung ist vorgesehen, dass systemseitig beispielsweise akustische Warnsignale in Abhängigkeit der visuellen Erfassung durch die Kameras erzeugt und über die Lautsprecher dem Fahrzeuglenker ausgegeben werden. Dieses System kann natürlich auch in Kombination mit Außenmikrofonen zum Einsatz kommen.

Die Generierung eines Warntons soll dazu beitragen, einem Fahrzeuglenker frühzeitig nicht nur über die visuelle Wahrnehmung potentielle Gefahren aufzuzeigen. Wird beispielsweise über die Kameras ein zu nahes Auffahren anderer Verkehrsteilnehmer registriert, oder erkannt, dass sich im überwachten Umgebungsbereich des Zugfahrzeuggespanns Personen und/oder Gegenstände aufhalten, so erfolgt über die Lautsprecheranlage des Zugfahrzeugs eine Warnsignalausgabe. Ohne dass es einen Blick auf die erfindungsgemäß vorgesehene Anzeigeoberfläche bedarf, wird der Fahrer auf die bevorstehende Gefahrensituation über den Alarmton hingewiesen. Er hat alsdann die Möglichkeit, über die erfindungsgemäße Ausgestaltung visuellen Einblick zu nehmen und alsdann in entsprechender Weise zu handeln.

In diesem Zusammenhang kann gemäß einem weiteren Merkmal der Erfindung vorgesehen sein, dass die von den Kameras erfassten Bilddaten einem Algorithmus unterzogen werden, der eine Risikoanalyse insbesondere mit Blick auf potentielle Gefahren vornimmt. In diesem Zusammenhang kann auch auf die gespeicherten Bilddaten zurückgegriffen werden. Aus einer Abfolge mehrerer Bilddaten lässt sich beispielsweise die Annäherungsgeschwindigkeit oder -beschleunigung anderer Verkehrsteilnehmer errechnen, was wiederum als Kriterium für eine potentielle Unfallgefährdung dienen kann. Es können alsdann in Abhängigkeit der softwareseitig ermittelten Gefahren entsprechende Ausgaben an den Lenker des Fahrzeuges erfolgen, wobei die Ausgabe hinsichtlich ihrer Wichtigkeit auch gestaffelt sein kann, beispielsweise zwischen leichte Gefährdung, mittlere Gefährdung und hohe Gefährdung. Diese Unterscheidung kann insbesondere deshalb Sinn machen, um nicht ungewollt Überreaktionen beim Fahrzeuglenker hervorzurufen.

Weitere Merkmale und Vorteile der Erfindung ergeben sich aus der nachfolgenden Beschreibung anhand der Fign. Dabei zeigen
- Fig. 1: in einer schematischen Draufsicht von oben ein mit einer erfindungsgemäßen Rücksehhilfe ausgestattetes Fahrzeuggespann;
- Fig. 2: in schematischer Seitenansicht ein mit einer erfindungsgemäßen Rücksehhilfe ausgestattetes Fahrzeuggespann;
- Fig. 3: in schematischer Darstellung die Funktionsweise der erfindungsgemäßen Rücksehhilfe;
- Fig. 4: in schematischer Darstellung ein Display der erfindungsgemäßen Rücksehhilfe in Gebrauchsstellung;
- Fig. 5: in schematischer Darstellung ein Display der erfindungsgemäßen Rücksehhilfe in Nicht-Gebrauchsstellung;
- Fig. 6: in schematischer Frontansicht einen Rückspiegel in einer besonderen Ausgestaltung nach der Erfindung und
- Fig. 7: den Rückspiegel nach Fig. 6 gemäß Schnittlinie VII-VII nach Fig. 6.

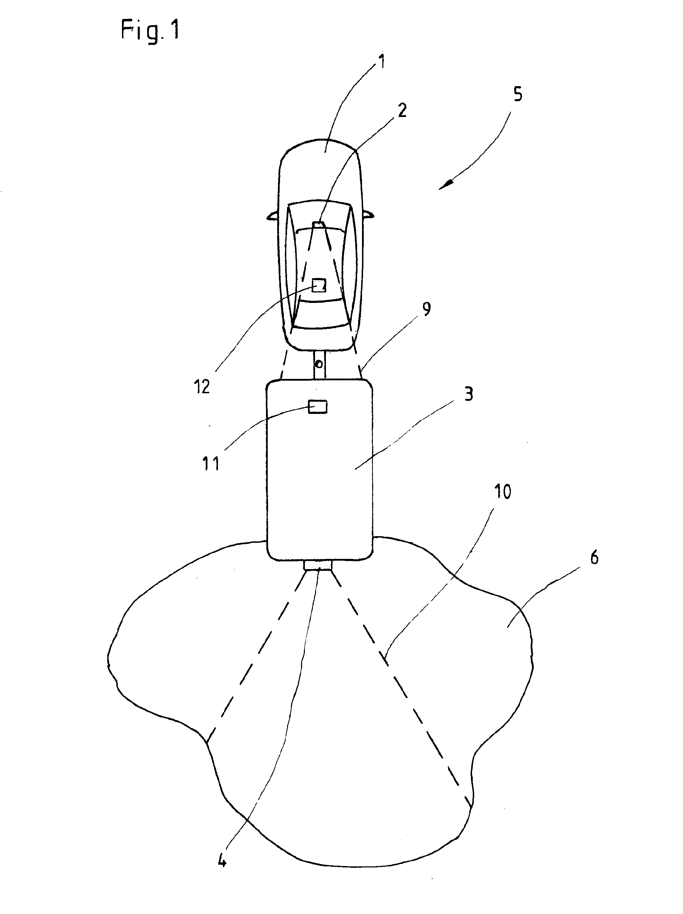

Fig. 1 lässt in schematischer Draufsicht von oben einen Pkw 1 und einen Wohnanhänger 3 erkennen, die zusammen ein Fahrzeuggespann 5 bilden. Der Wohnanhänger 3 ist an den Pkw 1 in an sich bekannter Weise angekoppelt. Der Pkw 1 dient dem Wohnanhänger 3 insofern als Zugfahrzeug.

Der Pkw 1 verfügt in an sich bekannter Weise über einen Rückspiegel 2, der im Innenraum des Pkws 1 angeordnet ist und insofern auch als Innenspiegel bezeichnet werden kann. Der Pkw 1 verfügt darüber hinaus über nicht weiter bezifferte Außenspiegel.

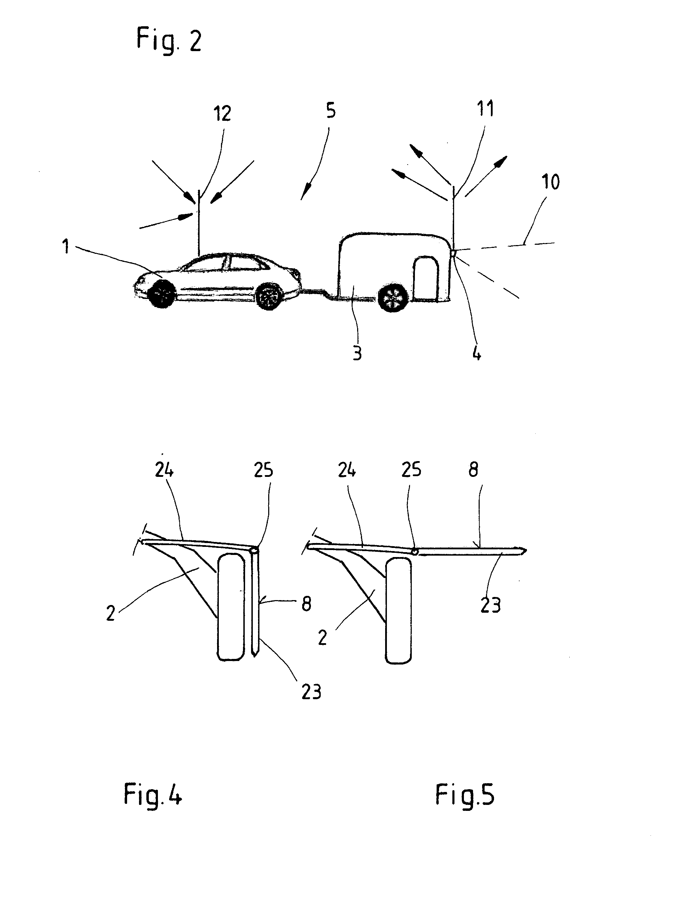

Wie die schematische Darstellung nach Fig. 1 erkennen lässt, kann mittels des Rückspiegels 2 ein Spiegelbild des rückwärtigen Umgebungsbereichs 6 des Fahrzeuggespanns 5 nicht wiedergegeben werden, da der schematisch dargestellte Erfassungsbereich 9 des Rückspiegels 2 durch den an den Pkw 1 angehängten Wohnanhänger 3 versperrt ist. Der Fahrer des Pkws 1 kann bei einem Blick in den Rückspiegel 2 zwar den an den Pkw 1 angehängten Wohnhänger 3 erkennen, nicht aber den Umgebungsbereich 6 des Fahrzeuggespanns 5. Dieser Sachzusammenhang ergibt sich auch aus der Darstellung nach Fig. 2, die ein Fahrzeuggespann 5 in schematischer Seitenansicht zeigt.

Die erfindungsgemäße Rücksehhilfe verfügt über eine Kamera 4, die rückwärtig des Wohnanhängers 3 angebracht ist und die den rückwärtigen Umgebungsbereich 6 des Fahrzeuggespanns 5 zumindest teilweise erfasst. Im gezeigten Ausführungsbeispiel nach den Fign. 1 und 2 ist die Kamera 4 heckseitig des Wohnanhängers 3 montiert und vermag den mit gestrichelter Linie nur angedeuteten Bildbereich 10 zu erfassen.

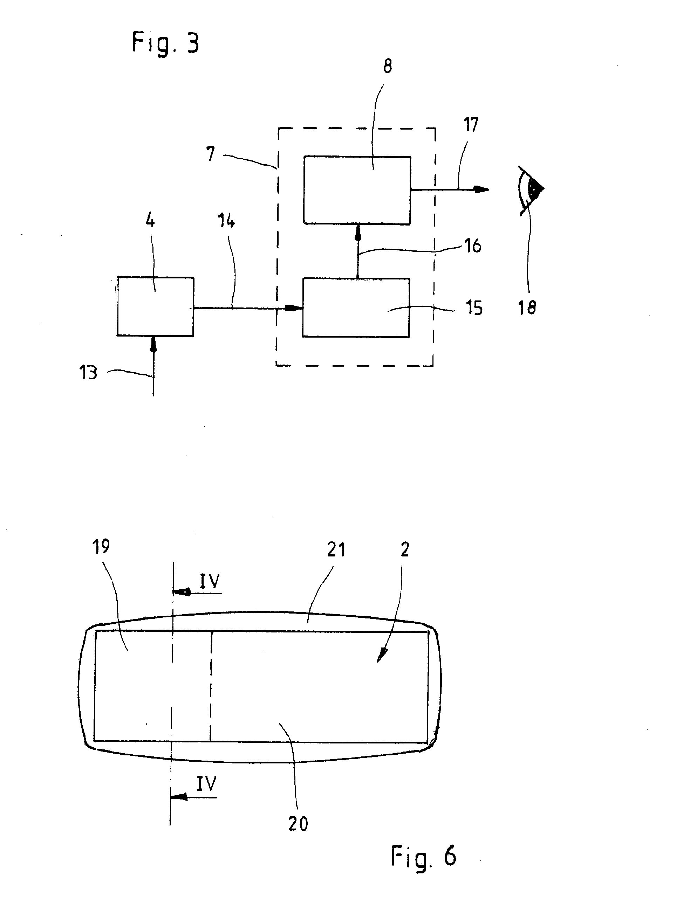

Das von der Kamera 4 erfasste Bild wird mittels einer Anzeigeeinrichtung 7 wiedergegeben. Zu diesem Zweck verfügt die Anzeigeeinrichtung 7 über eine Anzeigeoberfläche 8. Diese ist bevorzugterweise als Teil eines Displays 23 ausgebildet. Fig. 3 zeigt in schematischer Darstellung die Funktionsweise der erfindungsgemäßen Rücksehhilfe. Die Kamera 4 erfasst ein Eingangssignal 13. Dieses wird von der Kamera 4 als Bildinformation 14 an die Anzeigeeinrichtung 7 übermittelt. Die Anzeigeeinrichtung 7 verfügt ihrerseits über eine Verarbeitungseinrichtung 15 und eine Anzeigeoberfläche 8. Die Bildinformation 14 wird an die Verarbeitungseinrichtung 15 geleitet, wo dann eine Verarbeitung und gegebenenfalls Auswertung stattfindet. Die Verarbeitungseinrichtung kann auch eine Optimierung der Bildinformationen vornehmen, beispielsweise hinsichtlich Helligkeit- und/oder Kontrastaufwertung. Das von der Verarbeitungseinrichtung 15 generierte Ausgangssignal 16 gelangt sodann zur Anzeigeeinrichtung 7, wo dann die Bilddarstellung 17 stattfindet, welche mittels des menschlichen Auges 18 wahrnehmbar ist.

Die Anzeigeoberfläche 8 der Anzeigeeinrichtung 7 ist bevorzugterweise als Teil eines Displays 23 ausgebildet. Eine bevorzugte Ausgestaltung ist in den Fign. 4 und 5 dargestellt.

Wie diese Fign. erkennen lassen, ist das die Anzeigeoberfläche 8 bereitstellende Display 23 verschwenkbar an einem Halter 24 angeordnet. Mittels des hierfür vorgesehenen Gelenks 25 kann das Display 23 relativ zum Halter 24 verschwenkt werden, und zwar aus einer Nicht-Gebrauchsstellung, wie sie in Fig. 5 dargestellt ist, in eine Gebrauchsstellung, wie sie Fig. 4 zeigt, und umgekehrt.

Mittels des Halters 24 kann das Display 23 beispielsweise am Rückspiegel 2 des Pkws 1 befestigt sein. Im Verwendungsfall, wenn also an dem Pkw 1 ein Wohnanhänger 3 angekoppelt ist und die erfindungsgemäße Rücksehhilfe zum Einsatz kommt, ist das Display 23 in seine Gebrauchsstellung gemäß Fig. 4 überführt. In der Gebrauchsstellung ersetzt die Anzeigeoberfläche 8 des Displays 23 den Rückspiegel 2 und deckt diesen zumindest teilweise ab. Der Fahrer des Pkws kann in gewohnter Weise für einen Blick nach hinten in Richtung des Rückspiegels 2 sehen. Anstelle eines im Rückspiegel 2 projizierten Spiegelbilds sieht er allerdings das von der Kamera 4 erfasste und mittels der Anzeigeoberfläche 8 des Displays 23 wiedergegebene Kamerabild. Für den Fahrer wird somit die normale Verwendung des Rückspiegels 2 simuliert, als könne also der Fahrer mit Hilfe des Rückspiegels 2 durch den Wohnanhänger 3 hindurchsehen.

Soll der Rückspiegel 2 in gewohnter Weise Verwendung finden, so kann das Display 23 verschwenkt und beispielsweise nach oben geklappt werden, wie dies mit Fig. 5 dargestellt ist. In dieser Stellung befindet sich das Display in der Nicht-Gebrauchsstellung, die sich beispielsweise dann ergibt, wenn der Pkw 1 ohne daran angekoppelten Wohnanhänger 3 Verwendung findet.

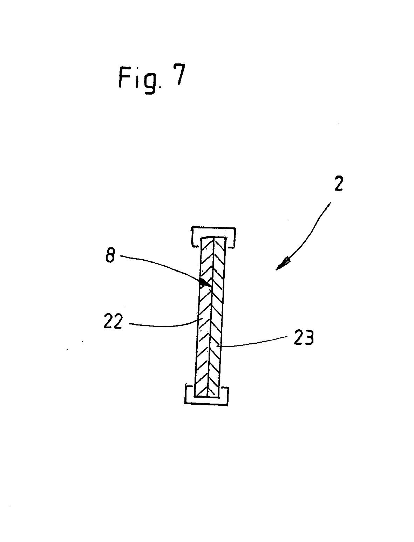

Die Fign. 6 und 7 lassen eine alternative Ausgestaltung des Displays 23 erkennen. Gemäß dieser Ausgestaltung ist die Anzeigeoberfläche 8 des Displays 23 als integraler Bestandteil des Rückspiegels 2 ausgebildet. Wie zu erkennen ist, wird die Anzeigeoberfläche 8 von dem Display 23 bereitgestellt. In Blickrichtung auf den Rückspiegel 2 ist das Display 23 durch einen Spiegel 22 abgedeckt, der frontseitig eine Spiegelfläche bereitstellt. Das Display 23 und der Spiegel 22 sind von einem gemeinsamen Rahmen 21 umgeben. Der Spiegel 22 ist transparent ausgebildet, und zwar derart, dass bei aktiviertem Display 23 das auf die Anzeigeoberfläche 8 projizierte Kamerabild von einem Verwender durch den Spiegel 22 hindurch wahrnehmbar ist. Im deaktivierten Zustand des Displays 23 ist die Anzeigeoberfläche 8 des Displays 23 durch den Spiegel 2 abgedeckt und somit quasi unsichtbar.

Die erfindungsgemäße Einrichtung kann über mehrere Kameras verfügen. Die von sämtlichen Kameras gelieferten Bilder können über die Anzeigeoberfläche 8 zur Anzeige gebracht werden. Dabei kann vorgesehen sein, je Kamera eine Teiloberfläche 19, 20 innerhalb der Anzeigeoberfläche 8 auszugestalten. Auf diese Weise lassen sich sämtliche Kamerabilder gleichzeitig darstellen und von einem Verwender wahrnehmen. Gemäß einer alternativen Ausgestaltung kann aber auch vorgesehen sein, bei mehreren Kameras nur das Bild einer Kamera zur Anzeige zu bringen, wobei der Verwender wahlweise zwischen den von den einzelnen Kameras erfassten Bildern wechseln kann.

Zur Übertragung der von der Kamera erfassten Bilder zur Anzeigeeinrichtung 7 kommt bevorzugterweise eine Funkverbindung zum Einsatz. Zu diesem Zweck ist Pkw-seitig eine Empfangsantenne 12 vorgesehen. Der Wohnanhänger 3 ist dementsprechend mit einer Sendeantenne 11 ausgerüstet.

### Bezugszeichenliste

- 1: Pkw
- 2: Rückspiegel
- 3: Wohnanhänger
- 4: Kamera
- 5: Fahrzeuggespann
- 6: Umgebungsbereich
- 7: Anzeigeeinrichtung
- 8: Anzeigefläche
- 9: Erfassungsbereich Rückspiegel
- 10: Bildbereich Kamera
- 11: Antenne
- 12: Antenne
- 13: Eingangssignal
- 14: Bildinformation
- 15: Verarbeitungseinrichtung
- 16: Ausgangssignal
- 17: Bilddarstellung
- 18: menschliches Auge
- 19: Teilfläche
- 20: Teilfläche
- 21: Rahmen
- 22: Spiegel
- 23: Display
- 24: Halter
- 25: Gelenk

## Patentansprüche

1. Rücksehhilfe für ein Fahrzeuggespann (5) aus einem Pkw (1) und einem von dem Pkw (1) gezogenen Anhänger, insbesondere Wohnanhänger (4), mit einer den rückwärtigen Umgebungsbereich (6) des Fahrzeuggespanns (5) zumindest teilweise erfassenden Kamera (4) sowie einer Anzeigeeinrichtung (7) für die von der Kamera (4) gelieferten Bildinformationen (14), **dadurch gekennzeichnet, dass** die Anzeigeeinrichtung (7) eine Anzeigeoberfläche (8) aufweist, die als Ersatz für einen im Innenraum des Pkws (1) angeordneten Rückspiegel (2) dient.

2. Rücksehhilfe nach Anspruch 1, **dadurch gekennzeichnet, dass** die Anzeigeoberfläche (8) als Teil eines Displays (23) ausgebildet ist.

3. Rücksehhilfe nach Anspruch 2, **dadurch gekennzeichnet, dass** das Display (23) innenseitig des Pkws (1) angeordnet ist.

4. Rücksehhilfe nach Anspruch 2 oder 3, **dadurch gekennzeichnet, dass** das Display (23) an dem im Innenraum des Pkws (1) vorgesehenen Rückspiegel (2) angeordnet ist.

5. Rücksehhilfe nach einem der vorhergehenden Ansprüche 2 bis 4, **dadurch gekennzeichnet, dass** das Display (23) verschwenkbar im Innenraum des Pkws derart angeordnet ist, dass es in Verwendungsstellung den vom Rückspiegel (2) bereitgestellten Spiegel (22) abdeckt.

6. Rücksehhilfe nach Anspruch 1, **dadurch gekennzeichnet, dass** die Anzeigeoberfläche (8) als integraler Bestandteil des Rückspiegels (2) ausgebildet ist.

7. Rücksehhilfe nach einem der vorhergehenden Ansprüche, **gekennzeichnet durch** eine Mehrzahl von Kameras.

8. Rücksehhilfe nach Anspruch 7, **dadurch gekennzeichnet, dass** die Anzeigeoberfläche (8) eine der Anzahl der Kameras entsprechende Anzahl von Teilanzeigeoberflächen bereitstellt.

9. Rücksehhilfe nach einem der vorhergehenden Ansprüche, **gekennzeichnet durch** eine Verarbeitungseinrichtung (15) zur Verarbeitung der von der Kamera (4) gelieferten Bildinformationen (14).

10. Rücksehhilfe nach einem der vorhergehenden Ansprüche, **gekennzeichnet durch** einen Datenspeicher.

11. Rücksehhilfe nach einem der vorhergehenden Ansprüche, **gekennzeichnet durch** eine Funkverbindung zwischen Kamera (4) und Anzeigeeinrichtung (7).

12. Rücksehhilfe nach einem der vorhergehenden Ansprüche, **gekennzeichnet durch** eine akustische Aufnahme-, Aufbereitungs- und/oder Wiedergabeeinrichtung.

13. Rücksehhilfe nach Anspruch 12, **dadurch gekennzeichnet, dass** die akustische Aufnahme-, Aufbereitungs- und/oder Wiedergabeeinrichtung über im Innenraum des Pkws (1) angeordnete Lautsprecher verfügt.

14. Rücksehhilfe nach Anspruch 12 oder 13, **dadurch gekennzeichnet, dass** die akustische Aufnahme-, Aufbereitungs- und/oder Wiedergabeeinrichtung Mikrofone aufweist.

15. Verwendung einer Rücksehhilfe für ein Fahrzeuggespann (5) aus einem Pkw (1) und einem von dem Pkw (1) gezogenen Anhänger, insbesondere Wohnanhänger (4), mit einer den rückwärtigen Umgebungsbereich (6) des Fahrzeuggespanns (5) zumindest teilweise erfassenden Kamera (4) sowie eine Anzeigeeinrichtung (7) für die von der Kamera (4) gelieferten Bildinformationen (14), wobei die Anzeigeeinrichtung (7) eine Anzeigeoberfläche aufweist, die als Ersatz für einen im Innenraum des Pkws (1) angeordneten Rückspiegel (2) dient.
